# EUROPEAN PATENT APPLICATION

(11) **EP 0 662 406 A1**
(43) Date of publication of application: **12.07.1995**
(21) Application number: 94308222.2
(22) Date of filing: 09.11.1994
(51) Int. Cl.: B60R 5/04

(54) **A parcel shelf for a vehicle**

(30) Priority: 06.01.1994 GB 9400162
(71) Applicant: ROVER GROUP LIMITED, Bickenhill Birmingham B37 7HQ (GB)
(72) Inventor: Monaghan, Michael Thomas, Hall Green, Birmingham B28 8DT (GB); Nickless, Robin, Walsall WS1 3HD (GB); Newman, Nicholas, Coventry CV4 7DU (GB)
(74) Representative: Wilson, Alan Stuart

(57) **Abstract**

A moulded plastics parcel shelf for a vehicle comprises five sections (20, 22, 24, 26, 28) joined by fold lines (12, 14, 16, 18). Two of the sections (22, 24) have a length of elastic chord (76) which draws them together when the shelf is released form the vehicle body to ensure that the shelf folds in the correct manner.

## Description

The present invention relates to parcel shelves such as those used over the luggage compartment of a vehicle. It is particularly suitable for use in estate vehicles, but could also be used in hatch-backs.

Currently parcel shelves are most common in hatch-back vehicles. They comprise a first section towards the front of the vehicle and a second section hingedly attached to the first. In order to allow access to the luggage compartment, the second section of the shelf is usually attached to the tailgate in some way so that it is lifted up when the tailgate is raised. However, this arrangement would not work in an estate car where the parcel shelf would be much longer and the tailgate would not open in a suitable direction to raise the shelf. In estate vehicles, if any kind of cover for the luggage compartment is provided, it is usually in the form of a flexible sheet mounted, for example, on a roller.

It is therefore an aim of the present invention to provide a rigid parcel shelf suitable, for example, for use in an estate vehicle, and in particular one that can easily be folded up in the correct manner.

Accordingly the present invention provides a parcel shelf for covering the luggage compartment of a vehicle, the parcel shelf comprising first, second and third rigid shelf sections, the second section being hingedly attached to the first and third sections, means for securing the first section to a fixed part of a vehicle, and means for releasably securing at least one of the second and third sections to a fixed part of the vehicle such that on release the second and third sections can be folded up to uncover at least part of the luggage compartment wherein biasing means are provided for biasing the second and third sections towards a folded position.

This arrangement helps to ensure that the first step of the folding process is carried out correctly. The biasing means may act on either one of the second and third sections, or on both of them.

Preferably the biasing means acts on the second and third sections to urge them together.

Preferably the biasing means comprises an elastic member attached to at least one of the second and third sections.

Preferably the releasable securing means comprises two securing mechanisms, one on either side of the parcel shelf, both operable by a single operating mechanism.

Preferably the shelf further comprises a fourth shelf section, hingedly attached to the third section, which can be folded up with the second and third sections.

The present invention also provides a parcel shelf for covering the luggage compartment of a vehicle, the parcel shelf comprising first, second, third and fourth rigid shelf sections, the second section being hingedly attached to the first and third sections, and the fourth section being hingedly attached to the third section, means for securing the first section to a fixed part of a vehicle, and means for releasably securing at least one of the second, third and fourth sections to a fixed part of the vehicle such that on release the second, third and fourth sections can be folded up to uncover at least part of the luggage compartment.

This arrangement can provide a parcel shelf which offers the stiffness and support of conventional rigid parcel shelves, but which folds up more compactly.

Conveniently the sections are arranged such that in use, in a folded position, the second and third sections are on top of the first section and the fourth section is on top of the third section.

A parcel shelf according to any foregoing claim formed of moulded plastics.

A preferred embodiment of the present invention will now be described by way of example only with reference to the accompanying drawings in which:
Figure 1 is a view from below of a parcel shelf according to the present invention;
Figure 2 is a section through the parcel shelf of Figure 1;
Figure 3 is a section similar to Figure 2, but showing the parcel shelf in a folded position; and
Figure 4 is a section through part of the parcel shelf of Figure 1 on a plane parallel to that of Figure 2.

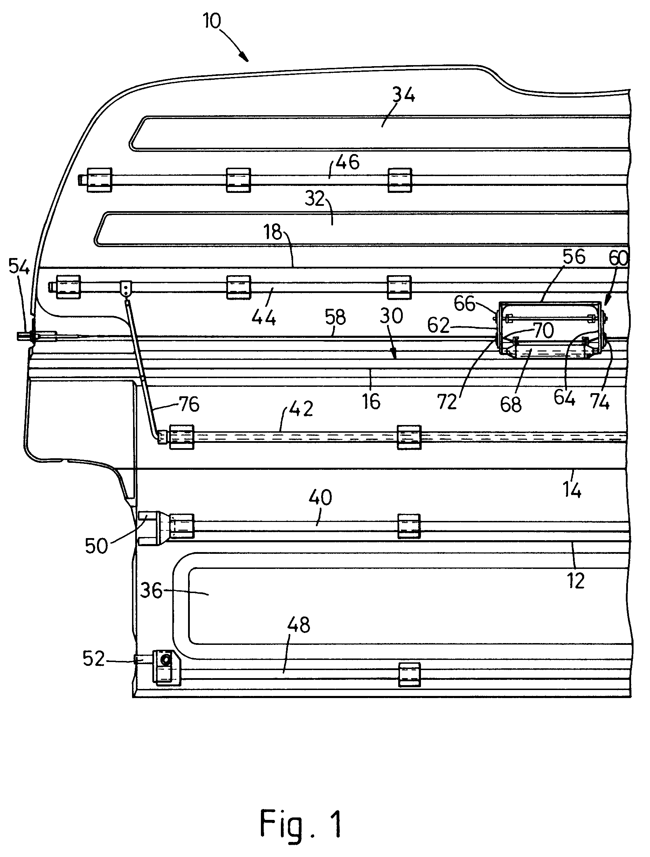

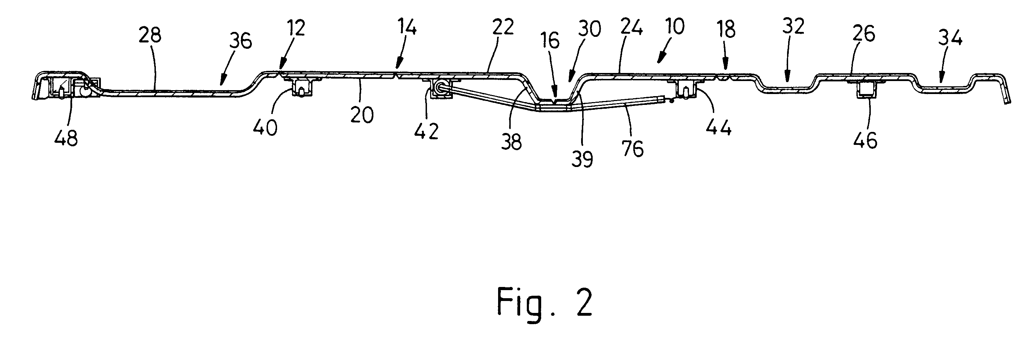

Referring to Figures 1 and 2, the parcel shelf 10 has four parallel fold lines 12, 14, 16, 18 running across it dividing it into a first section 20, a second section 22, a third section 24, a fourth section 26, and a fifth section 28. The fifth section 28 is intended to be nearest the front of the vehicle, followed by the first to fourth sections 20, 22, 24, 26 in that order. The parcel shelf 10 is essentially flat with four troughs 30, 32, 34, 36 running across it, one 30 formed by the rear edge 38 of the second section 22 and the front edge 39 of the third section 24, two 32, 34 formed in the fourth section, and one 36 formed in the fifth section. A series of tubular supporting members 40, 42, 44, 46, 48 of square cross section are attached to its under side 28 and extend across substantially its whole width, one on the first section 20, one on the second section 22 in front of the trough 30, one on the third section behind the trough 30, one on the fourth section between the troughs 32 and 34, and one on the fifth section in front of the trough 36.

The parcel shelf 10 is secured to the vehicle body by catches 50, 52 located on the supporting members 40, 48 on the first and fifth sections 20, 28 of the shelf. These are of a standard snap-fit type allowing the shelf to be removed from the vehicle if required. The shelf is further secured to the vehicle body by securing pins 54 mounted on the underside of the third section 24 of the shelf. The pins 54, when in a locking position, protrude sideways beyond the edge of the shelf to engage with detents in the vehicle body. They are retractable, against the biasing force of respective springs (not shown), so as to allow the second, third and fourth sections 22, 24, 26 of the shelf to be folded. The securing pins are operated by a common operating mechanism, shown in section in Figure 4, comprising a length of string 58 having each end attached to one of the pins 54 and a release mechanism 60 for pulling the ends of the string together. The release mechanism comprises a pair of parallel levers 62, 64 pivotably attached to the shelf at one end 66 and joined by a handle 68 at the other end with the string 58 passing through holes 70 in the levers near the handle. The string also passes through guide members 72, 74 attached to the shelf close to the normal position of the holes 70 in the levers 62, 64. Therefore when the handle 68 is pulled the ends of the string 68 and the securing pins 54 are pulled towards the centre of the shelf and the second third and fourth sections 22, 24, 26 of the shelf can be folded. The release mechanism 60 is situated in a recess 56 in the third section 24 of the shelf which is formed as an extension of the trough 16 between the second and third sections 22, 24. It is therefore flush with the top surface of the shelf. The string 58 is on the under side of the shelf apart from where it passes through the recess 56.

The folding of the shelf is started by raising the second and third sections 22, 24 of the shelf at the fold line 16 where they join. In order to ensure that this occurs when the pins 54 are released, an elastic cord 76 is provided to draw the under sides of the second and third sections together. The cord 76 extends through the supporting member 42 on the second section of the shelf and has each end attached to the supporting member 44 on the third section of the shelf. The length of the cord 76 is such that when the shelf is flat it is under tension.

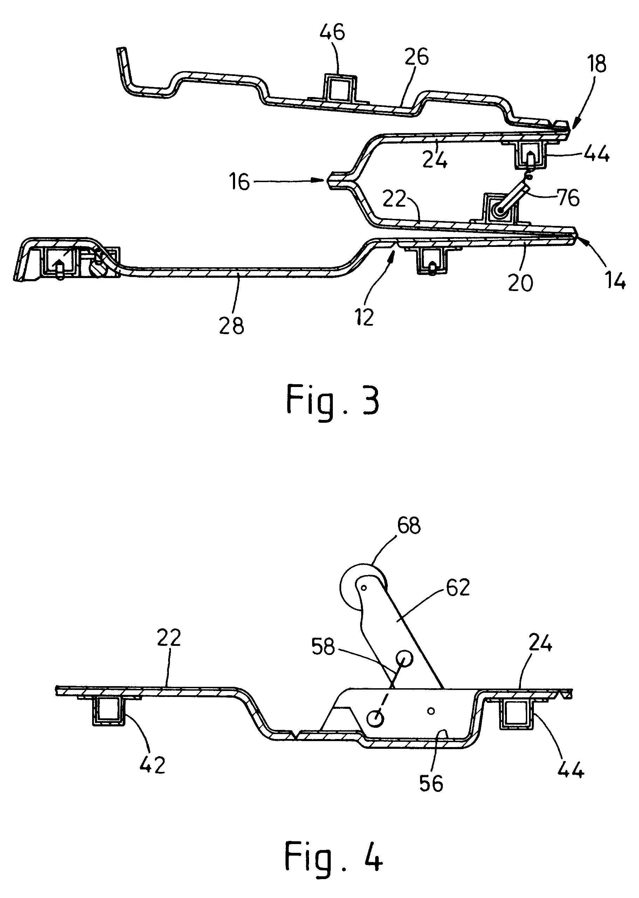

In order to fold the shelf 10, the securing pins 54 are released by pulling the handle 68 upwards. The elastic cord 76 then draws the second and third sections 22, 24 of the shelf together so that the fold line 16 where they join rises. The fourth section 26 is then manually pushed backwards so that the second and third sections come together and the second, third and fourth sections folded up into the position shown in Figure 3. In the folded position the second section 22 lies on top of the first, the third section 24 lies on top of the second, and the fourth section 26 lies on top of the third.

When the shelf 10 is in the flat position shown in Figure 2, access can be gained to the luggage area by releasing the securing mechanism 52 on the fifth section of the shelf and raising the fifth section, pivoting it about the fold line 12.

## Claims

1. A parcel shelf for covering the luggage compartment of a vehicle, the parcel shelf comprising first, second and third rigid shelf sections (20,22,24,) the second section (22) being hingedly attached to the first and third sections (20, 24), means (50,52) for securing the first section (20) to a fixed part of a vehicle, characterized by means (54) for releasably securing at least one of the second and third sections to a fixed part of the vehicle such that on release the second and third sections can be folded up to uncover at least part of the luggage compartment wherein biasing means (76) are provided for biasing the second and third sections towards a folded position.

2. A parcel shelf according to claim 1 wherein the biasing means (76) acts on the second and third sections (22,24) to urge them together.

3. A parcel shelf according to claim 1 or claim 2 wherein the biasing means (76) comprises an elastic member attached to at least one of the second and third sections (22,24).

4. A parcel shelf according to any foregoing claim wherein the releasable securing means (54) comprises two securing mechanisms, one on either side of the parcel shelf, both operable by a single operating mechanism (62, 64, 76).

5. A parcel shelf according to any foregoing claim wherein the shelf further comprises a fourth shelf section (26), hingedly attached to the third section (24), which can be folded up with the second and third sections (22,24).

6. A parcel shelf for covering the luggage compartment of a vehicle, characterized in that the parcel shelf comprises first, second, third and fourth rigid shelf sections (20,22,24,26), the second section (22) being hingedly attached to the first and third sections (20,24), and the fourth section (26) being hingedly attached to the third section, means (50,52) for securing the first section to a fixed part of a vehicle, and means (54) for releasably securing at least one of the second, third and fourth sections to a fixed part of the vehicle such that on release the second, third and fourth sections can be folded up to uncover at least part of the luggage compartment.

7. A parcel shelf according to claim 5 or claim 6 wherein the sections (20,22,24,26) are arranged such that in use, in a folded position, the second and third sections (22,24) are on top of the first section (22) and the fourth section (26) is on top of the third section (24).

8. A parcel shelf according to any foregoing claim formed of moulded plastics.
